# EUROPEAN PATENT SPECIFICATION

(11) **EP 2 602 076 B1**
(45) Date of publication and mention of the grant of the patent: **27.04.2016**
(21) Application number: 12188082.7
(22) Date of filing: 11.10.2012
(51) Int. Cl.: B27B 5/16, B23D 47/02, B27B 5/29

(54) **Chop saw with top table**
Kappsäge mit Oberplatte
Scie à onglet avec table supérieure

(30) Priority: 09.12.2011 GB 201121194
(43) Date of publication of application: 12.06.2013
(73) Proprietor: Black & Decker Inc., Newark, Delaware 19711 (US)
(72) Inventor: Spinelli, Luigi, 06126 Perugia (IT)
(74) Representative: Bell, Ian Stephen

(56) References cited:
- EP-A2- 1 813 400
- DE-U1-202004 019 137
- US-A1- 2010 269 660

## Description

The present invention relates to chop saws, and in particular, to chop saws which can also perform mitre cuts and/or bevel cuts.

EP1813400 discloses a sliding compound mitre saw with a height adjustable table mounted on top of the motor unit. Such a saw can act either as a sliding compound mitre saw performing bevel cuts, mitre cuts, sliding cuts and chop cuts by pivotal movement of the motor unit above a base when a work piece is placed on the base or a table saw when motor unit is locked in its lowest position and the work piece is passed over the table.

EP1813400 discloses two height adjustment mechanisms for the table mounted on the motor unit. However, it has been found that such designs allow too much sideways movement of the tubular support when the height of the table is being adjusted.

EP2014399 discloses a sliding compound mitre saw with an LED 39 (using the same reference numbers as EP2014399) which shines a light over the blade to cast a shadow on the base assembly which can be sued to indicate the position where the blade will cut a work piece when the work piece is place on the base assembly.

DE202004019137 discloses a chop saw having the features of the preamble of claim 1 with a second table mounted on the motor unit, the height of which above the motor unit can be adjusted.

Accordingly there is provided a saw comprising:
a base;
a first table rotatably mounted about a vertical axis (8) within the base (4);
a bevel mount (16) pivotally mounted about a horizontal axis (18) on the edge of the first table;
a motor unit pivotally mounted on the bevel mount to allow the motor unit to pivot from a first raised position towards the table to a second lowered position;
a saw blade rotatably mounted on and capable of being rotationally driven by the motor unit; and
a second table mounted via a height adjustment mechanism on the motor unit having a slot formed through the second table through which the top section of the circular saw blade is capable of projecting;
the height adjustment mechanism comprising a support rod attached to the second table which is capable of being axially slid in a linear manner on the motor unit, the sliding movement of the support rod being controlled by a guide mechanism;
a locking mechanism to releasably lock the position of the support rod on the motor unit;
wherein the guide mechanism comprises a sliding support mounted on the motor unit which slidingly engages with the side of the support rod,
characterised in that the sliding support comprises a body slidingly attached to the motor unit having two projections formed along one side of the body, facing towards the support rod the two projections engaging with the side of the support rod, when the body is slid towards the support rod.

An embodiment of the present invention will now be described with reference to the accompanying drawings of which:
Figure 1 shows a perspective view of an example of a chop saw with a height adjustable table mounted on the motor unit when the motor unit locked in its lowest position;
Figure 2 shows a partial side view of the saw;

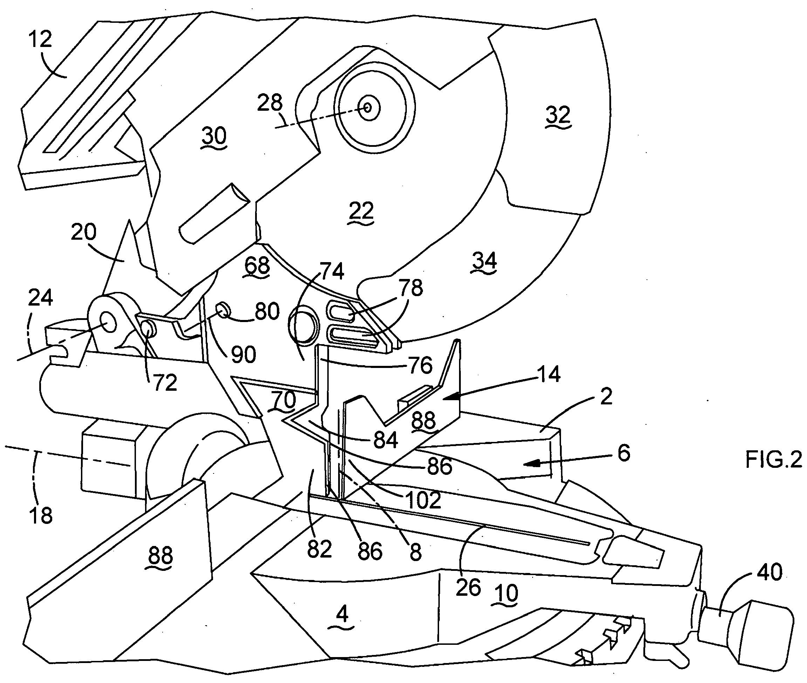

Figure 2 shows a second partial side view of a saw;

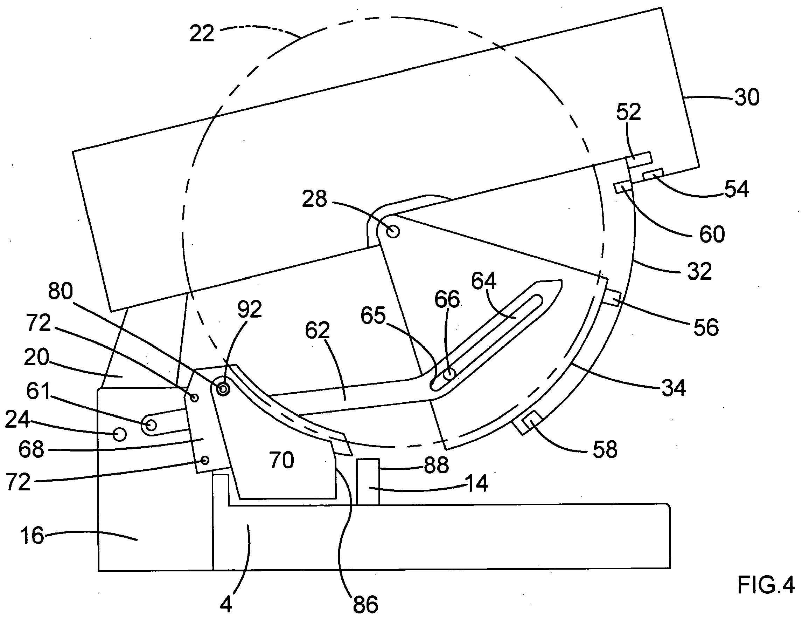

Figure 4 shows a schematic diagram of the guard assembly;

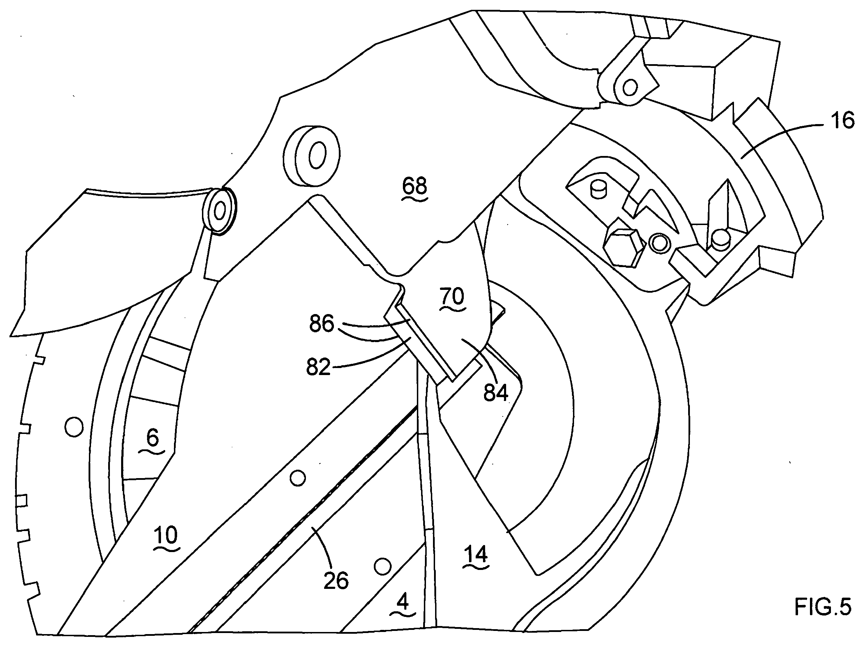

Figure 5 shows a first view of the rear guard assembly when the saw is performing a bevel and mitre cut;

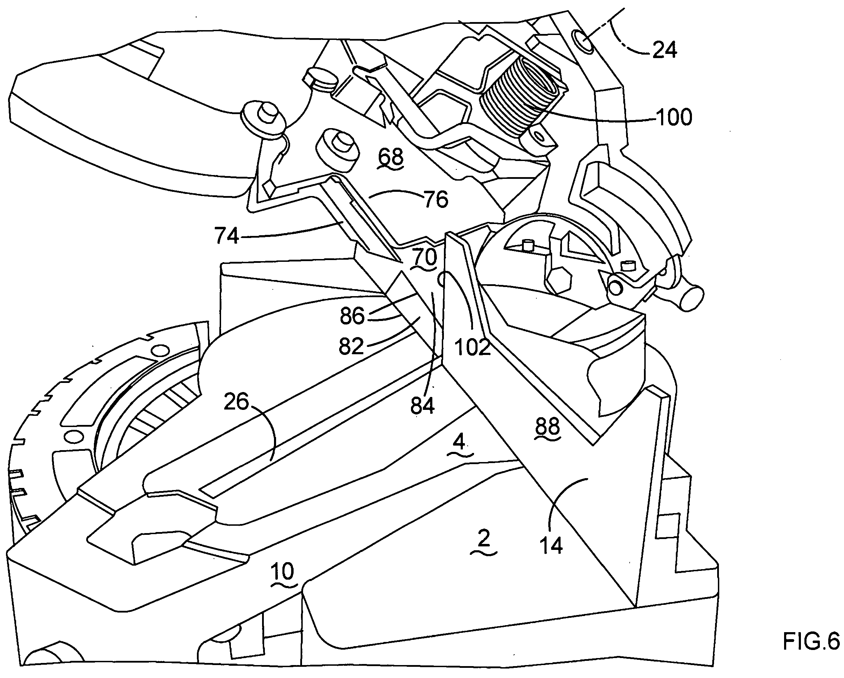

Figure 6 shows a second view of the rear guard assembly when the saw is performing a bevel and mitre cut;

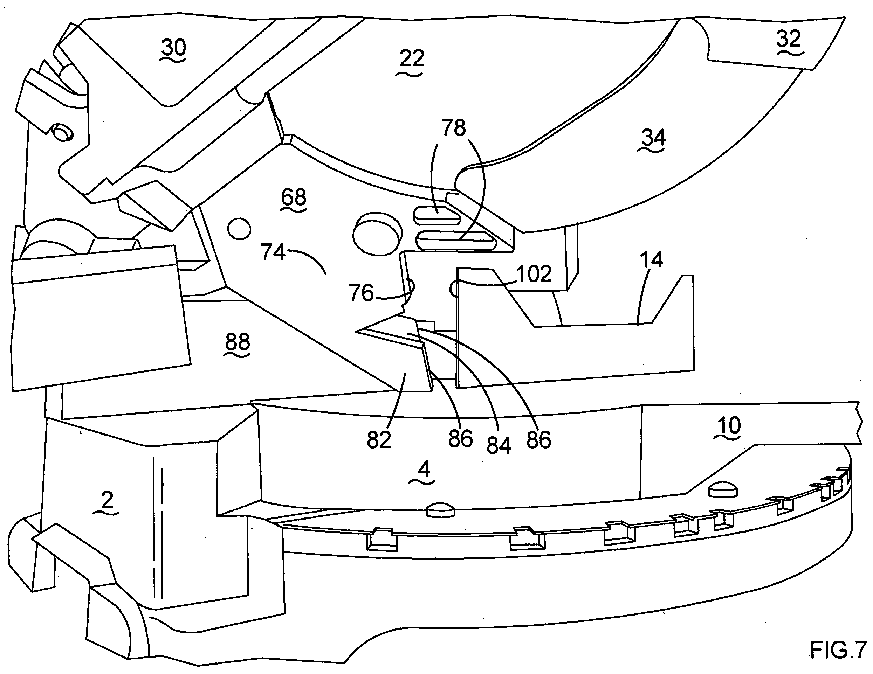

Figure 7 shows a third view of the rear guard assembly when the saw is performing a bevel and mitre cut;

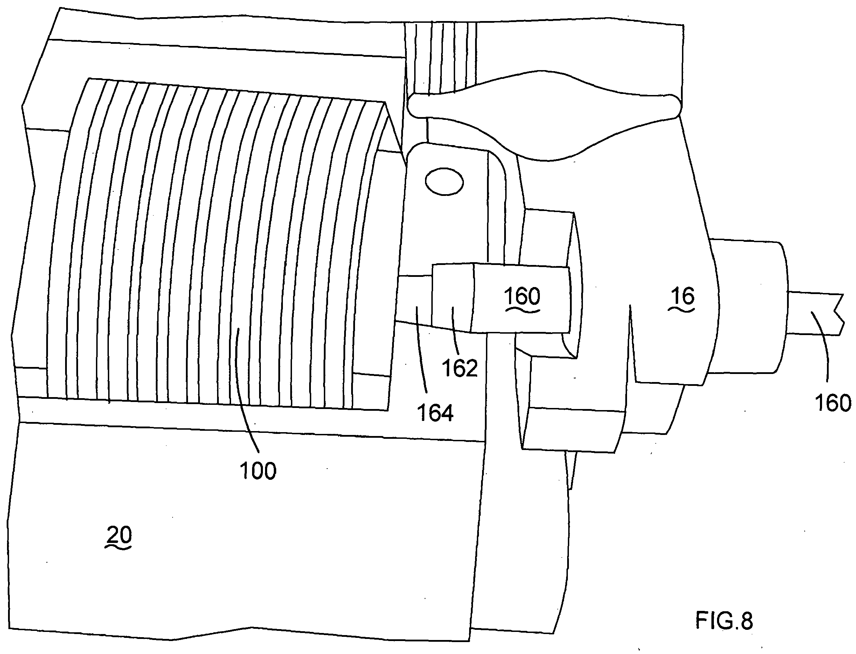

Figure 8 shows the locking mechanism for the motor unit;

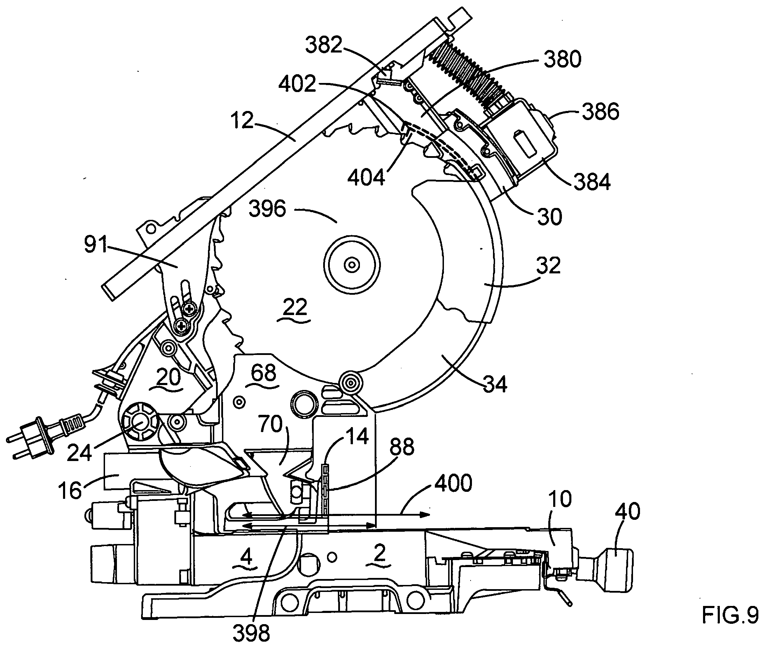

Figure 9 shows a side view of a saw with the front of the fixed guard and sixth slideable guard removed to provide an exposed view of the blade and pivotal guards saw in accordance with an embodiment of the present invention;

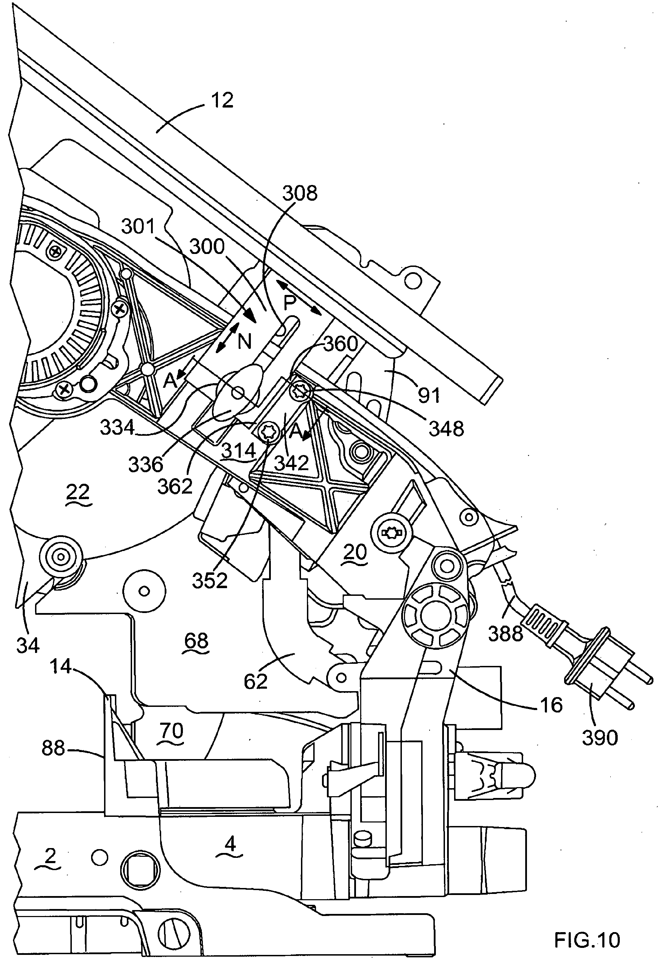

Figure 10 shows a partial side view of the of the saw from the other side;

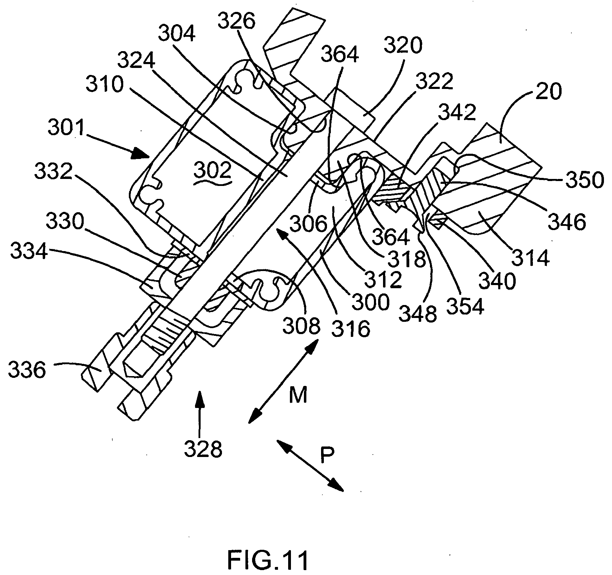

Figure 11 shows a cross sectional view of the tubular support for the table in the directions of Arrows A in Figure 10;

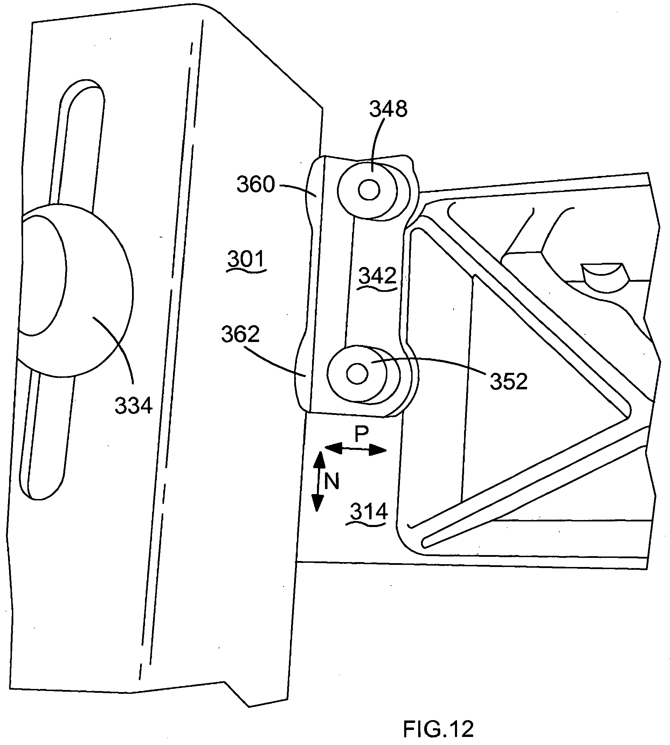

Figure 12 shows a view of the tubular support and sliding mount mounted on the wall of the motor unit only;

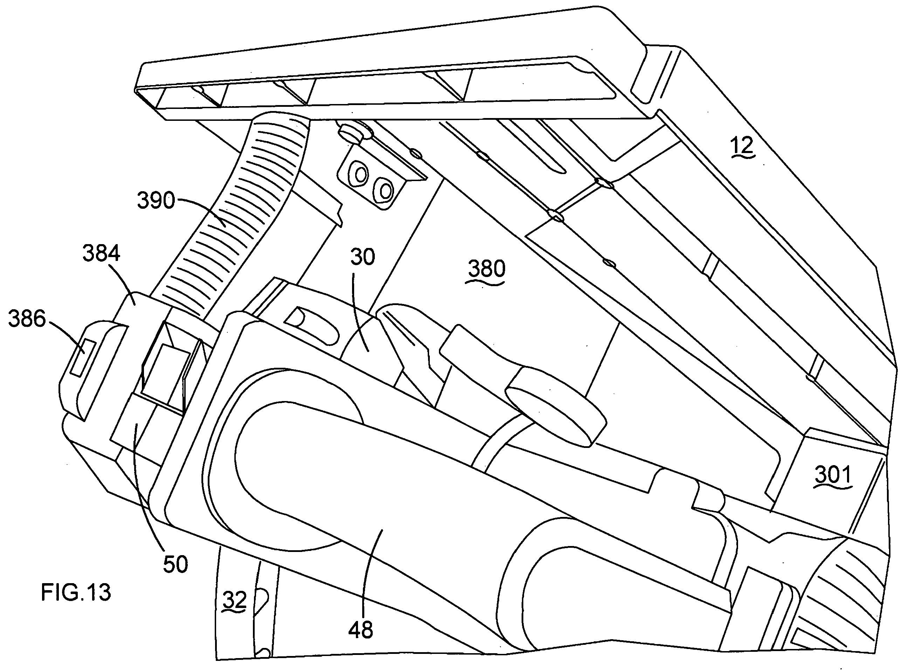

Figure 13 shows a perspective view of the light guide electric switch for the light guide system;

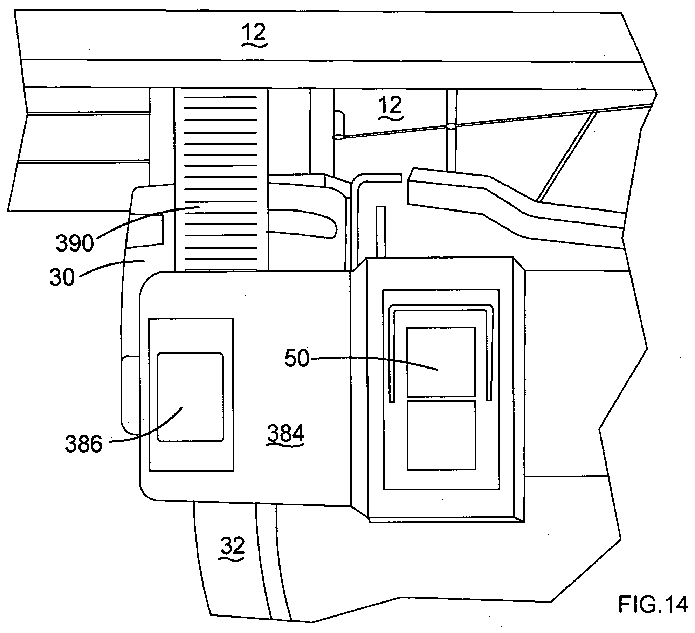

Figure 14 shows a front view of the light guide electric switch for the light guide system;

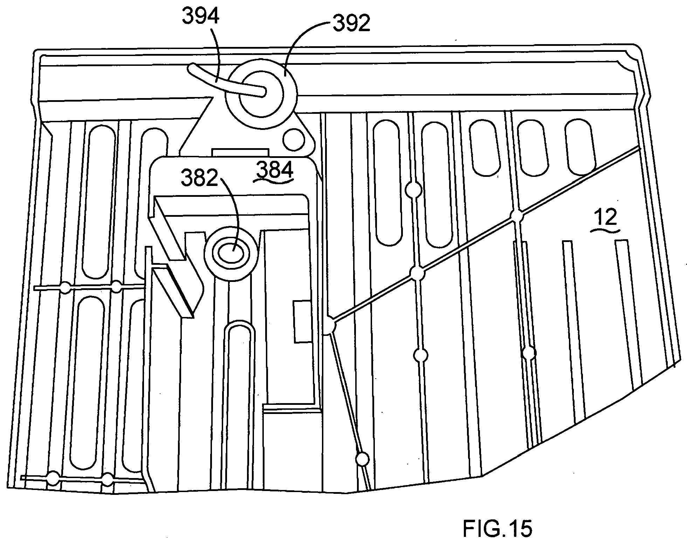

Figure 15 shows a view of the underside of the table with the light source attached; and

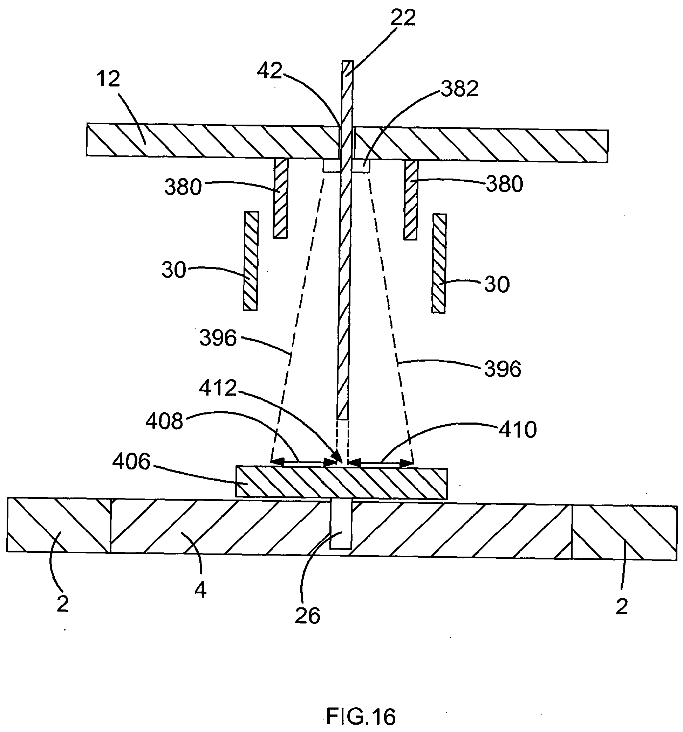

Figure 16 shows a schematic vertical cross sectional view of the saw with the light guide system switch on.

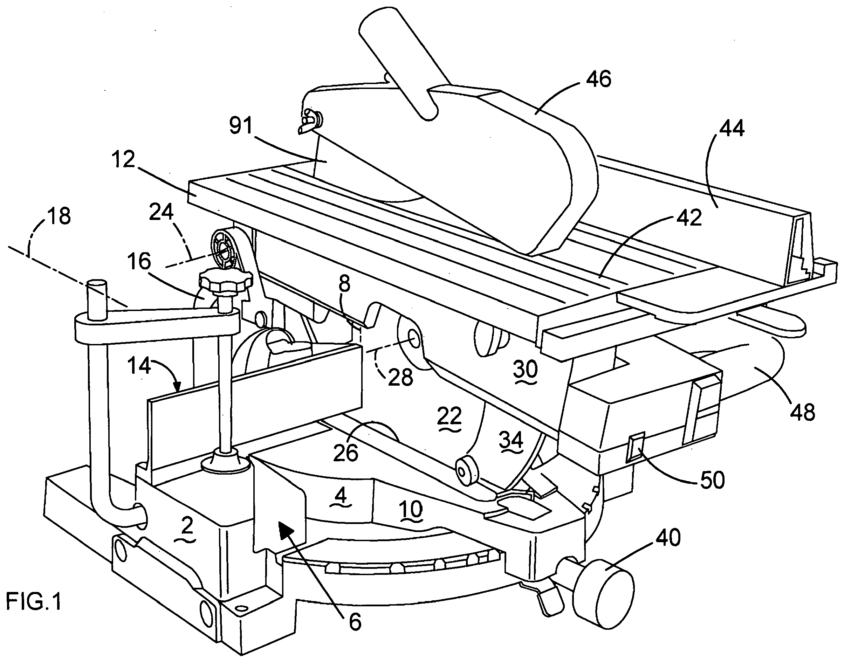

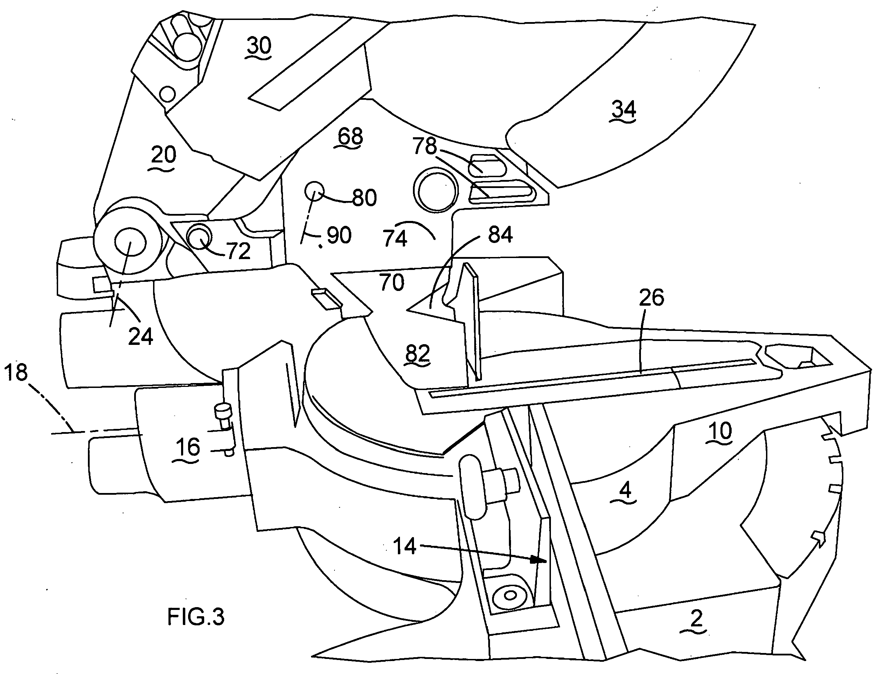

An example of a saw will now be described with reference to Figures 1 to 8.

Referring to Figure 1, there is provided a chop saw with a table 12. The saw comprises a base 2 having a rotatable table 4 mounted within it. The rotatable table 4 can pivot about a vertical axis 8 within the base 2. A locking mechanism 40 can lock the rotatable table 4 in various angular positions within the base 2. An extension arm 10 is rigidly attached to the periphery of the rotatable table 4 and extends forward in well known manner within a recess 6 formed within the base 2. The recess 6 provides a space in which the arm 10 can move when the rotatable table 4 is rotated about the axis 8. The top surface of the base 2, rotatable table 6 and extension arm 10 are flush to provide an overall work surface for a work piece. A slot 26 extends across the rotatable table 104 and along the extension arm 10. The rotation of the rotatable table 4 about the axis 8, in conjunction with a fence 14 fixed to the base 2 and which extends across the rotatable table 4, enables the saw to perform mitre cuts.

Connected to the rear of the rotatable table 4 is a bevel mount 16 which is able to pivot about a horizontal axis 18 in relation to the rotatable table 4, which horizontal axis 18 is parallel to the plane of the work surface of the rotatable table 4. A locking mechanism (not shown) enables the angular position about the axis 18 of the bevel mount 16 to be releasably locked relative to the rotatable table 4. The pivotal movement of the bevel mount 16 about axis 18 in relation to the rotatable table 4 enables the saw to perform bevel cuts.

Pivotally mounted on the bevel mount 16 is a motor unit 20, which comprises a motor (not shown) for rotationally driving a circular saw blade 22 mounted on a drive spindle on the motor unit 20 about an axis 28. The motor unit 20 can pivot on the bevel mount 16 about an axis 24 from a raised first position where the motor unit is remote from the base 2 and rotatable table 4, to a lowered second position where it is in close proximity to the base 2 and rotatable table. The axis 24 is parallel to the axis 28. The slot 26 in the table 4 and arm 10 provides a space within the table 4 and arm 10 into which the cutting edge of the saw blade 22 can pass when the motor unit 20 is pivoted to its lowered position to enable it to pass through a work piece when positioned on the table 4 and arm 10. The motor unit 20 is biased to an upward position by a spring 100. A locking mechanism is mounted on the bevel mount which is capable of locking the motor unit 20 in its lowered second position as shown in Figure 1. The locking mechanism comprises a pin 160 mounted within the bevel mount 16 in an axailly slideable manner as seen in Figure 8. The pin 16 can be slid between a first position where it is disengaged from the motor unit 20, allowing it to freely pivot about axis 24, to a second position when the motor unit 20 is in its lowered second position where its end 162 engages with a groove 164 formed in the side of the motor unit 20 to lock it in its lower position. The end of the pin is tapered in a lengthwise direction to form a frusto conical shape. The groove 164 narrows along its length in order to provide a corresponding tapered shape along its length which can mate with that of the end 162 of the pin 160. By tapering the groove 164 and the end 162 of the pin 160, it ensures that a tight fit is provided between the two when the end of the pin is engaged with the groove 164. The pivotal movement of the motor unit 20 in relation to the bevel mount 16 about axis 24 enables the saw to perform chop cuts.

Mounted on the top of the saw is the table 12 which enables the saw to be also used as a table saw. The table 12 is attached to the top side of the motor unit 20. A slot 42 is formed through the table through which the top section of the circular saw blade 22 projects. When the motor unit 20 is locked in its lowered second position, the table 12 is horizontal. A work piece such as a piece of wood can then be slid across the top of the table 12 to engage with the top section of the saw blade 22 thus enabling the saw to be used as a saw table. A table fence 44 is releasably attached to the table 12 and which can be used to guide a work piece across the table 12. A table guard 46 is releasably mounted on the table which can surround the top of the saw blade 22 which projects through the table 12 when it is not being used as a table saw. A riving knife 91 is attached to the motor unit 20 and which projects through the slot 42.

The saw comprises a plurality of guards located below the table 12 which are capable of enclosing the cutting edge of the lower section of the saw blade 22 for safety purposes when the saw is in its raised first position when it is not being used to perform chop, mitre, or bevel cuts, or when the saw is being used as a table saw, with the motor unit 20 locked in its lowered second position.

A handle 48 is attached to the motor unit by which a user can grip and pivot the motor unit 20 and the circular saw blade 22 downwards towards the rotatable table 4. An electric switch 50 is mounted adjacent the handle 48 for activating the motor. The switch can operate in two modes of operation. The first mode is when the saw is performing chop, mitre or bevel cuts. In this mode, the switch 50 must be constantly depressed by the operator to keep the motor activated thus ensuring the hand of the operator remains on the handle in contact with the switch. In the second mode, when the saw is being used as a table saw, the switch 50 can be depressed once to activate the motor, the motor remaining activated until the switch is depressed again. This allows the operator to move his hands freely without having to maintain contact with the switch.

The height of the table 12, and hence the amount of saw blade 22 passing through it, can be adjusted vertically. The height adjustment mechanism for the table 12 is the same as that described in EP1813400.

The cutting edge of the lower part of the circular saw blade 22 below the table 12 is surrounded by a guard assembly. The guard assembly comprises a first fixed guard 30 which surrounds the cutting edges of the middle section of the saw blade 22, a forward guard assembly which is capable of surrounding the lower front section of the cutting edge of the cutting blade 22 and a rear guard assembly which is capable of surrounding the lower rear section of the cutting edge of the cutting blade 22.

The first fixed guard 30 is attached to the motor unit 20 and surrounds the cutting edges of the middle section of the circular saw blade 22. The fixed guard 30 remains stationary relative to the motor unit 20.

The forward guard assembly will now be described with reference to figure 4.

Pivotally attached to the first fixed guard 30 is a second forward pivotal guard 32. The second forward pivotal guard 32 pivots about the axis 28 of the circular saw blade 22. The second pivotal forward pivotal guard 32 can freely pivot into and out of in a telescopic manner the fixed guard 30. The second forward pivotal guard 32 is prevented from completely pivoting out of the fixed guard 30 by a catch 52 formed on the second forward pivotal guard 32 which engages with a ledge 54 formed on the fixed guard 30 when the second forward pivotal guard 32 has pivoted to its furthest position outside of the fixed guard 30.

Pivotally attached to the first fixed guard 30 is a third forward pivotal guard 34. The third forward pivotal guard 32 also pivots about the axis 28 of the circular saw blade 22.

The third pivotal forward pivotal guard 34 can pivot into and out of, in a telescopic manner, the second forward pivotal guard 32 and also into and out of the fixed guard 30 when the first forward pivotal guard 32 has moved telescopically inside of the fixed guard 30. The third forward pivotal guard 34 is prevented from completely pivoting out of the second forward pivotal guard 32 by a second catch 56 formed on the third forward pivotal guard 32 which engages with a second ledge 58 formed on the first forward pivotal guard 32 when the second forward guard has pivoted to its furthest position outside of the first forward pivotal guard 32. The third forward pivotal guard 34 is prevented from completely pivoting through the second forward pivotal guard 32 by the second catch 56 formed on the third forward pivotal guard 32 engaging with a third ledge 60 formed on the first forward pivotal guard 32 when the second forward guard has pivoted to its furthest position inside of the first forward pivotal guard 32.

A spring (not shown) biases the third forward pivotal guard 34 downward (clockwise) as shown in figures 1 to 4.

A bar 62 is pivotally attached at one end about axis 61 to the bevel mount 16. An elongate slot 64 is formed along a section of the length of the bar 62 at the other end. A pin 66, rigidly attached to the third forward pivotal guard 34 passes through the slot 64 and which is capable of sliding along the slot 64. The biasing spring acting on the third forward pivotal guard 34 causes the guard to pivot until the pin 66 is at the inner end position 65 of the slot 64 where it remains held by the force of the spring. The pin 66 located within the slot 64 of the bar 62 controls the pivotal movement of the third guard 34 on the motor unit as the motor unit 20 pivots upwards and downwards. When the motor unit 20 is in its upper most raised first pivotal position, the second and third forward pivotal guards 32, 34 surround the cutting edge of the lower front section of circular saw blade 22 as shown in Figure 2. As the motor unit 20 is pivoted downwardly, the bar 62 pushes the pin 66, causing the third forward pivotal guard 34 to telescopically pivot into the second forward pivotal guard 32 until the second catch 56 engages with the third ledge 60. As the motor unit 20 continues to be pivoted downwardly, the bar 62 continues to push the pin 66, causing the third forward pivotal guard 34 together with the second forward pivotal guard via the second catch 56 and third ledge 60, to telescopically pivot into the first fixed guard 30. The slot 64 allows the guard to pivot freely relative to the bar 62, against the biasing force of the spring, if it encounters a work piece located on the base 2 or table 4.

The rear guard assembly will now be described with reference to figure 4.

The rear guard assembly comprises two parts, a fourth rearward fixed guard 68 and a fifth rearward pivotal guard 70.

The fourth rearward fixed guard 68 comprises a U shaped bracket rigidly fixed to the bevel mount 16 via bolts 72 and which surrounds part of the cutting edge of the rear lower section of the blade 22. One side 74 of the U shaped bracket locates along one side of the cutting blade 22, the other side 76 of the U shaped bracket locates along the other side of the cutting blade 22. The fourth rearward fixed guard 68 surrounds the part of the cutting edge of the rear lower section of the blade 22 when the motor unit 20 is in its raised position or its lowered position and all the positions in between, when the motor unit 20 is pivoted about axis 24. A series of elongate holes 78 are formed in one side 74 of the fixed guard 68 to enable a user to view the side of the blade 22 located within the fixed guard 68. The fourth rearward fixed guard 68 is located above the fence 14.

The fifth rearward pivotal guard 68 also comprises a U shaped bracket pivotally mounted within the fourth rearward fixed guard 68 via a bolt 80. A portion of the fifth rearward pivotal guard 70 locates behind the fence 14. The fifth rearward pivotal guard 70 surrounds a part of the cutting edge of the rear lower section of the blade 22 when the motor unit 20 is pivoted about axis 24 to its lowered position. When the motor unit 20 is in its lowest position, one side 82 of the U shaped bracket locates along one side of the cutting blade 22, the other side 84 of the U shaped bracket locates along the other side of the cutting blade 22. The fifth rearward pivotal guard 70 can pivot about axis 90 from a first forward position where the front edges 86 of the bracket are in close proximity to the working surface 88 of the fence, adjacent to the slot formed through the fence 14 through which the blade 22 passes when the motor unit is pivoted about axis 24 to its lowered position, to a second rearward position (clockwise as shown in Figure 4) where the fifth rearward pivotal guard 70 is located further inside of the fourth rearward fixed guard and where the front edges 86 are located a short distance behind the fence 14. A spring 92 biases the fifth rearward pivotal guard 70 to its first position.

The rear guard assembly ensures that the part of the cutting edge of the blade 22 which is located below the fixed guard and behind the fence 14 remains enclosed at all times regardless of the pivotal position of the motor unit 20 relative to the bevel mount 16. When the motor unit 20 is pivoted relative to the bevel mount 16 about axis 24, the fifth rearward pivotal guard 70 remains in a fixed position relative to the fourth rearward fixed guard 68 and bevel mount 16, the pivotal movement of the motor unit 20 about axis 24 having no effect on the pivotal position of the fifth rearward pivotal guard 70. When the motor unit 20 is in its raised position as shown in Figure 2, the whole of the cutting edge of the cutting blade 22 located below the fixed guard 30 is surrounded by the front and rear guard assemblies. When the motor unit 20 is in its lowered position as shown in Figure 1, the whole of the cutting edge of the cutting blade 22 located below the fixed guard 30 is enclosed by being surrounded in part by the front guard assembly and the rear guard assembly with the remaining portion being located within the slot 26 in the table 4 and arm.

The reason for making part of the rear guard assembly pivotal is due to the movement of the bevel mount 16, upon which it is mounted, relative to the base. When the saw performs mitre and/or bevel cuts by pivotal movement of the table 4 about axis 8 and/or pivotal movement of the bevel mount about axis 18, the position of the front edges 86 of the fifth rearward pivotal guard 70 move relative to the edges 102 of the slot formed through the fence 14 through which the blade 22 can pass as the motor unit 20 moves to its lower position, as shown in Figures 5 to 7. This can result, in certain positions, in the edges engaging with the edge 102 of the fence 14 and hence block or hinder the movement of the bevel mount 16 in relation to the base 2. Therefore, by making the part of the rear guard assembly located behind the fence 14 pivotal, the pivotal part can be moved rearwardly slightly by pivotal movement of the fifth rearward pivotal guard 70 to the movement of the bevel mount 16 being hindered or blocked relative to the base 2 whilst still enclosing the blade within the rearguard assembly when the rear guard assembly is moved due to the movement of the bevel mount relative to the base 2 and fence 14. The pivotal movement of the fifth rearward pivotal guard 70 occurs when it engages with the fence 14 as the bevel mount 16 moves.

An embodiment of a saw according to the present invention will now be described with reference to Figures 9 to 16. Where the same features are present in the embodiment, which are present in the example described above, the same reference numbers have been used. The embodiment is the same as the example except for the height adjustment mechanism for the table and the addition of a light guide system.

### Height Adjustment Mechanism

The height adjustment mechanism for the table 12 will now be described with reference to Figures 10 to 12.

The table 12 is moveably mounted on the motor unit 20 using a tubular support 301. The tubular support 301 allows the table 12 to slide up and down on the motor unit 20. The tubular support 301 is rigidly attached to the table and extends in a direction perpendicular to the plane of the working surface of the table 12. The sliding movement of the table 12 is perpendicular to working surface of the table, the sliding movement being vertical with the working surface is horizontal when the motor unit 20 is locked in its lowered second position.

The tubular support 301 comprises a metal tube 300 having a generally rectangular cross section, the precise shape of which is best seen in Figure 11. An inner wall 310 is formed inside of the tube 300 which traverses the width of the tube 300 to form two elongate passageways 302, 312 through the length of the tube 300. Formed externally in a wall of the tube 300 on one side is a trough 304 which runs the length of the tube 300. A first elongate slot 306 is formed in a lengthwise direction in the base of the trough 304. A second elongate slot 308 having the same dimensions as the first, is formed in the opposite wall of the tube 300 in a matching aligned position.

The tubular support 301 attaches to a side wall 314 of the motor unit 20 using a bolt 316.

Formed on the side wall 314 of the motor unit is a ridge 318 of similar dimensions to those of the trough 304 on the tubular support 301. When the tubular support 301 is mounted on the wall 314, the ridge 318 locates within the trough 304 as best seen in Figure 11. Formed through the ridge 318 is a circular hole 326 through which the shaft 324 of the bolt 316 passes. The head 320 of the bolt 316 locates against an inner surface 322 of the wall 314, the diameter of the shaft 324 of the bolt 316 being slightly smaller than that of the hole 326 to enable the shaft 324 to pass through it with minimal sideways movement, the diameter of the head 320 being larger than that of the hole 326 to prevent it passing through the hole 326.

The shaft 324 of the bolt 316 extends through the hole 326, then through the first elongate slot 306 and then through the second elongate slot 308. A locking knob assembly 328 (described below) is screwed onto the end of the shaft 324 to sandwich the tubular support 301 against the wall 314 of the motor unit 20.

The locking knob assembly 328 comprises a self-locking nut 330 (with nylon insert) being screwed onto the shaft 324 of the bolt 316. The nut 330 is screwed onto the shaft 324 sandwiching a washer 332 between the nut 330 and the outer wall of the tubular support 301. The nut 330 is screwed onto to the shaft to a predetermine position where a small predetermined compression force is applied to the tubular support 301 against the wall 314 of the motor unit. This allows the tubular support 301 limited movement in a direction away from or towards the wall 314 of the motor unit (Arrow M). A cup shaped washer 334 surrounds, but does not engage with the nut 330 which abuts against the washer 332. A knob 336 is then screwed onto the shaft 324 to sandwich the cup shaped washer 334 against the washer 332. Tightening of the knob 336, results in the knob 336 pushing the tubular support 301 against the wall 314 of the motor unit 20 via the cup shaped washer 334 to fix its position due to friction. The force applied by the knob is dependent on the amount by which the operator screws the knob 336 onto the shaft 324. The slackening of the knob 336 releases the tubular support 301 by allowing the cup shaped washer 334 to move away from the tubular support. The limited movement of the tubular support 301 in a direction away from or towards the wall 314 of the motor unit (Arrow M) allowed by the self locking nut 330 allows the tubular support 301 to slide in a direction (Arrow N) parallel to its longitudinal axis, relative to the motor unit 20, the shaft 324 of the bolt 316 travelling along the lengths of the two elongate slots 306, 308 as it does so. The direction of movement of the tubular support 301 is controlled by the ridge 318 sliding within the trough 304, the ridge 318 being prevented from leaving the trough 304 by the self locking nut 330. However, the self-locking nut 330 prevents excessive movement of the tubular support 301 in a direction away from or towards the wall 314 of the motor unit (Arrow M) whilst the tubular support 301 is slid in the direction of Arrow N.

Sideways (Arrow P) movement of the tubular support 301 is prevented by the ridge 318 located in the trough 304. However, due to tolerances during manufacture, it has been found that limited sideways (Arrow P) movement of the tubular support 301 occurs, allowing either a limited linear movement or a twisting movement relative to the motor unit 20. The twisting movement allows the tubular support 301 to be clamped to the side wall 314 of the motor unit 20 in a limited range of angular positions. This results in the working surface of the table 12 being non horizontal, when the tubular support 301 is clamped in a non vertical position when the motor unit 20 is located in its lowered second position.

In order to overcome this problem, there is provided a sliding support 340 which is mounted on the side wall 314 of the motor unit 320 and which engages with the side of the tubular support 301.

The sliding support 340 comprises a body 342 having two oval holes 354 formed through it. A shaft 346 of a first bolt 348 passes through one of the holes 354 and screws into a threaded bore 350 formed in the side wall 314 of the motor unit 20. A shaft of a second bolt 352 passes through the other hole and screws into a second threaded bore formed in the side wall of the motor unit 20. The dimension of the shafts of the two bolts 348, 352 are smaller than those of the holes 354, allowing the body 340 to be moved sideways (Arrow P) relative to position of the shafts 346. The dimensions of the head of the bolts 348, 352 are larger than those of the holes 354, thus preventing the heads from passing through the holes 354. When the bolts 348, 352 are screwed tightly into the threaded bores 350, the heads of the bolts 348, 352 abut against and clamp the body 342 against the sidewall 314 of the motor unit 20, preventing movement of the body 342 relative to the wall 314. However, when the bolts 348, 352 are screwed loosely into the threaded bores 350, the heads of the bolts 348, 352 locate a small distance away from the body 342, allowing the body 342 to slide sideways (Arrow P), the shafts of the bolts 348, 352 moving within the holes 354 as it does so.

Formed along one side of the body 342, facing towards the tubular support 301, are two projections 360, 362. The two projections 360, 362 engage with the side of the tubular support 301. When the tubular support 301 has been mounted on the motor unit 20 with the ridge 318 located within the trough 304 using the self locking nut 330, the washer 332 and bolt 316, during manufacture, the sliding support 340 is mounted onto the sidewall 314 of the motor unit 20 using the two bolts 348, 352. However, the bolts 348, 352 are only loosely screwed into the bores 350 allowing sideways movement of the body 342 on the wall 314. The body 342 is slid towards the tubular support 301 until the two projections 360, 362 engage with the side of the tubular support 301 and push a sidewall 364 of the ridge 318 into engagement with a side wall 366 of the trough 304. A predetermined amount of pressure is exerted by the siding support 340 in the direction of Arrow P on the tubular support 301 and hence the side wall 366 of the trough 304 on the ridge 318 to ensure that sideways (Arrow P) movement of the tubular support 301 is prevented whilst allowing it to slide vertically (Arrow N) when the height of the table 12 needs to be adjusted. The two bolts 348, 352 are then screwed tightly into the bores 350, causing the sliding support 340 to be clamped firmly to the wall 314 of the motor unit 20 and thus preventing any sliding movement. The use of two projections 360, 362 provides two points of contact only between the sliding support 340 and the tubular support 301, thus providing a firm and stable interaction between the two whilst preventing any relative movement between the two when they are engaged, The two projections hold the trough 304 of the tubular support 301 against the ridge in a firm manner, thus maintaining it in a vertical position.

### Light Guide System

The light guide system will now be described with reference to Figures 9 and 13 to 16. The light guide system is used when the saw is being used for chop, mitre or bevel cuts with the work piece being located on the base 2, rotatable table 4 and arm 10.

Rigidly attached to the under side of the table is a tubular sixth slideable guard 380 (as bet seen in Figure 15). The sixth slideable guard 380 is rectangular in cross section but of smaller dimensions that that of the fixed guard 30. The sixth slideable guard 380 locates inside of the fixed guard and slides in and out of the fixed guard 30 in a telescopic manner as the height of the table 12 above the motor unit 20 is adjusted. The sixth slideable guard 380 ensures that the portion of the blade 22 located between the table 12 and the fixed guard 30 remains enclosed at all times regardless of the height of the table 12 above the motor unit 20.

Located on the underside of the table 12 inside the sixth slideable guard 380 adjacent the front end of the sixth slideable guard 380 is a light source 382 comprising a white LED. The light source 382 is located directly above the edge of the cutting blade 22 and can shine a beam of light 396 towards the edge of the cutting blade 22.

An electronics housing 384 is mounted adjacent the handle 48. Inside the housing 384 are the control electronics for the motor and the power supply for the light source 382. Mounted on the front of the housing 384 is an electric ON/OFF switch 50 for switching the motor on or off, the motor being power by the control electronics. Mounted adjacent the ON/OFF switch 50 is a light switch 386 which is used by the operator to switch the light source 382 on or off. The power supply for the light source 382 and the control electronics is supplied from a 240v AC power supplied via a cable 388 and plug 390.

Connected between the housing 384 and the underside of the table 12 is a telescopic corrugated plastic tube 392. An electric cable 394 connects between the light source 382 and the power supply for the light source by passing through the side of the housing 384, through the corrugated plastic tube 392, underneath the table 12 whilst enclosed by a plate 394. Sufficient electric cable 394 is located within the corrugated plastic tube to enable the table to be raised to its highest position relative to the motor unit 20, the corrugated plastic tube 392 stretching as it does so.

The guide system is used when the saw is being used for chop, mitre or bevel cuts with the work piece being located on the base 2, rotatable table 4 and arm 10. In order to use it, the operator switches on the light source 382 using the light switch 386. The motor unit 20 is in initially in its raised first position as shown in Figure 9. The light source emits a diverging beam of light 396 towards the edge of the cutting blade 22, the beam of light passing on both sides of the blade 22. As the whole of the cutting edge of the cutting blade 22 located below the fixed guard 30 is surrounded by the front and rear guard assemblies when the motor unit 20 is in its raised position, the light beam 396 encounters the inside wall of the guards 32, 34 of the front blade guard assembly whilst passing through the guards 68, 70 of the rear guard assembly. As such, only the area below the rear guard assembly designated 398 in Figure 9 of the base, fence 14 and rotatable table 4 is illuminated by the light source 782. When the motor unit 20 is pivoted towards its lowered second position, the guards 32, 34 of the front guard assembly pivot into the fixed guard 30. When this occurs, the area below fixed guard 30 designated 400 in Figure 9 of the base 2, fence 14 and rotatable table 4 is illuminated by the light source 782. When the second and third forward pivotal guards 32, 34 have pivoted to their maximum position inside if the fixed guard they are located at positions 402 and 404 respectively. As such, they do not interfere with the light beam 396 inside of the fixed guard 30.

In use, a work piece 406 (see Figure 16) is placed on the rotatable table 4 and base 2. As the motor unit 20 is pivoted towards the work piece 406 to cut it, the pivotal guards 32, 34 of the front guard assembly, pivot into the fixed guard and out of the way of the blade 22 and the light beam 396. The light beam 396 shines past both sides of the blade 22 and illuminates the top of the work piece 406 in two areas 408, 410. However, the blade 22 casts a shadow 412 on the work piece 406 as it is positioned between the light source 382 and the work piece. The shadow 412 is indicative of the position where the cutting blade 22 will cut the work piece 406 when it comes into contact with the work piece 406. The operator can adjust the work piece 406 using the shadow 412 to ensure the correct part of the work piece 406 is cut. The two illuminated areas 408, 410 provide increased visibility for the operator of the work piece and the cutting operation.

## Claims

1. A saw comprising:
a base (2);
a first table (4) rotatably mounted about a vertical axis (8) within the base (4);
a bevel mount (16) pivotally mounted about a horizontal axis (18) on the edge of the first table (4);
a motor unit (20) pivotally mounted on the bevel mount to allow the motor unit to pivot from a first raised position towards the table to a second lowered position;
a saw blade (22) rotatably mounted on and capable of being rotationally driven by the motor unit (20); and
a second table (12) mounted via a height adjustment mechanism on the motor unit (20) having a slot (42) formed through the second table through which the top section of the circular saw blade 22 is capable of projecting;
the height adjustment mechanism comprising a support rod (301) attached to the second table which is capable of being axially slid in a linear manner on the motor unit, the sliding movement of the support rod (301) being controlled by a guide mechanism;
a locking mechanism (316, 336) to releasably lock the position of the support rod (301) on the motor unit (20);
wherein the guide mechanism comprises a sliding support (340) mounted on the motor unit (20) which slidingly engages with the side of the support rod (301),
**characterised in that** the sliding support comprises a body (342) slidingly attached to the motor unit having two projections (360, 362), formed along one side of the body (342), facing towards the support rod (301) the two projections (360, 362) engaging with the side of the support rod (301), when the body (342) is slid towards the support rod (301).

2. A saw as claimed in claim 1 wherein the guide mechanism comprises a first part mounted on the support rod (301) and a second part formed on the motor unit (20), one part comprises a trough (304), the other part comprising a ridge (318) which locates inside of the trough (304), the ridge (318 capable of sliding along the length of the trough (304) to control the sliding movement of the support rod (301) on the motor unit (20), the sliding support (340) urging a side of the ridge (318) into engagement with a side of the trough (304) to ensure there is no sideways movement of the ridge (318) within the trough (304).

3. A saw as claimed in claim 2 where the guide mechanism comprises a movement limiting mechanism (330, 332, 316) which maintains the ridge (318) within the trough (304) whilst allowing the ridge (318) to slide along the trough when the locking mechanism is released to allow sliding movement of the support rod (301) on the motor unit (20).

## Patentansprüche

1. Eine Säge, aufweisend:
Einen Sockel (2);
einen ersten Tisch (4) der drehbar um eine vertikale Achse (8) innerhalb des Sockels (4) montiert ist;
Eine Schräghalterung (16), die zentral um eine horizontale Achse (18) schwenkbar an der Kante des ersten Tischs (4) montiert ist;
eine Motoreinheit (20) die zentral schwenkbar an der Schräghalterung montiert ist, um der Motoreinheit zu ermöglichen, von einer ersten gehobenen Position hin zu dem Tisch in eine zweite, herabgelassene Position zu schwenken;
ein Sägeblatt (22), das drehbar an der Motoreinheit (20) montiert und in der Lage ist, in seiner Drehung von derselben angetrieben zu werden; und
einen zweiten Tisch (12), der über einen Höhenanpassungsmechanismus an der Motoreinheit (20) montiert ist und einen durch den zweiten Tisch hindurch geformten Schlitz (42) hat, durch welchen hindurch der Spitzenabschnitt des kreisrunden Sägeblatts 22 hervorzuspringen in der Lage ist;
welcher Höhenanpassungsmechanismus ein an dem zweiten Tisch befestigtes Stützgestänge (301) aufweist, welches in der Lage ist, axial in einer linearen Weise auf der Motoreinheit verschoben zu werden, welche Verschiebebewegung des Stützgestänges (301) von einem Führungsmechanismus gesteuert wird;
einen Feststellmechanismus (316, 336), um die Position des Stützgestänges (301) auf der Motoreinheit (20) lösbar zu festzustellen;
wobei der Führungsmechanismus eine an der Motoreinheit (20) montierte verschiebbare Stütze (340) aufweist, welche verschiebbar mit der Seite des Stützgestänges (301) eingreift,
**dadurch gekennzeichnet, dass** die verschiebbare Stütze einen verschiebbar an der Motoreinheit befestigten Körper (342) aufweist, der zwei Vorsprünge (360, 362) hat, die entlang einer Seite des Körpers (342) geformt sind, welche zwei Vorsprünge (360, 362), zu dem Stützgestänge (301) hingewandt, mit der Seite des Stützgestänges (301) eingreifen, wenn der Körper (342) zu dem Stützgestänge (301) hin verschoben wird..

2. Eine Säge wie in Anspruch 1 beansprucht, wobei der Führungsmechanismus einen ersten Teil, der an dem Stützgestänge (301) montiert ist, und einen zweiten Teil, der auf der Motoreinheit (20) geformt ist, aufweist, wobei ein Teil eine Vertiefung (304) aufweist und der andere Teil eine Erhöhung (318), welche sich in der Vertiefung (304) befindet, aufweist, welche Erhöhung (318 in der Lage ist, entlang der Länge der Vertiefung (304) verschoben zu werden, um die Verschiebebewegung des Stützgestänges (301) auf der Motoreinheit (20) zu steuern, wobei die verschiebbare Stütze (340) eine Seite der Erhöhung (318) in den Eingriff mit einer Seite der Vertiefung (304) drängt, um sicherzustellen, dass keine seitliche Bewegung der Erhöhung (318) innerhalb der Vertiefung (304) stattfindet.

3. Eine Säge wie in Anspruch 2 beansprucht, wobei
der Führungsmechanismus einen die Bewegung begrenzenden Mechanismus (330, 332, 316) aufweist, welcher die Erhöhung (318) innerhalb der Vertiefung (304) hält, während er der Erhöhung (318) ermöglicht, entlang der Vertiefung verschoben zu werden, wenn der Feststellmechanismus gelöst wird um Verschiebebewegungen des Stützgestänges (301) auf der Motoreinheit (20) zu ermöglichen.

## Revendications

1. Scie comprenant :
une base (2) ;
une première table (4) montée en rotation autour d'un axe vertical (8) à l'intérieur de la base (4) ;
une monture de coupe en oblique (16) montée de manière pivotante autour d'un axe horizontal (18) sur le bord de la première table (4) ;
une unité formant moteur (20) montée de manière pivotante sur la monture de coupe en oblique pour permettre à l'unité formant moteur de pivoter d'une première position élevée vers la table à une seconde position abaissée ;
une lame de scie (22) montée en rotation sur l'unité formant moteur (20) et susceptible d'être entraînée en rotation par cette dernière ; et
une seconde table (12) montée via un mécanisme de réglage de hauteur sur l'unité formant moteur (20) ayant une fente (42) formée à travers la seconde table à travers laquelle la section supérieure de la lame de scie circulaire 22 est susceptible de dépasser ;
le mécanisme de réglage de hauteur comprenant une tige de support (301) attachée à la seconde table qui est susceptible d'être coulissée de façon axiale d'une façon linéaire sur l'unité formant moteur, le mouvement coulissant de la tige de support (301) étant commandé par un mécanisme de guidage ;
un mécanisme de verrouillage (316, 336) pour verrouiller de façon amovible la position de la tige de support (301) sur l'unité formant moteur (20) ;
dans laquelle le mécanisme de guidage comprend un support coulissant (340) monté sur l'unité formant moteur (20) qui met en prise de manière coulissante le côté de la tige de support (301),
**caractérisée en ce que** le support coulissant comprend un corps (342) attaché de manière coulissante à l'unité formant moteur ayant deux parties en saillie (360, 362), formées le long d'un côté du corps (342), faisant face vers la tige de support (301) les deux parties en saillie (360, 362) mettant en prise le côté de la tige de support (301), lorsque le corps (342) est coulissé vers la tige de support (301).

2. Scie selon la revendication 1, dans laquelle le mécanisme de guidage comprend une première partie montée sur la tige de support (301) et une seconde partie formée sur l'unité formant moteur (20), une partie comprend une cuvette (304), l'autre partie comprenant une arête (318) qui se situe à l'intérieur de la cuvette (304), l'arête (318) étant susceptible de coulisser le long de la longueur de la cuvette (304) pour commander le mouvement coulissant de la tige de support (301) sur l'unité formant moteur (20), le support coulissant (340) poussant un côté de l'arête (318) en prise avec un côté de la cuvette (304) pour assurer qu'il n'y a aucun mouvement oblique de l'arête (318) à l'intérieur de la cuvette (304).

3. Scie selon la revendication 2 où le mécanisme de guidage comprend un mécanisme de limitation de mouvement (330, 332, 316) qui maintient l'arête (318) à l'intérieur de la cuvette (304) tout en permettant à l'arête (318) de coulisser le long de la cuvette lorsque le mécanisme de verrouillage est libéré pour permettre un mouvement coulissant de la tige de support (301) sur l'unité formant moteur (20).
